# EUROPÄISCHE PATENTANMELDUNG

(11) **EP 2 236 802 A1**
(43) Veröffentlichungstag der Anmeldung: **06.10.2010**
(21) Anmeldenummer: 10152430.4
(22) Anmeldetag: 02.02.2010
(51) Int. Cl.: F02F 7/00, F16C 5/00

(54) **Kreuzkopf-Grossdieselmotor**

(30) Priorität: 20.03.2009 EP 09155689
(71) Anmelder: Wärtsilä Schweiz AG, 8401 Winterthur (CH)
(72) Erfinder: Kiser, Silvan, 8400 Winterthur (CH); Sönnichsen, Samuel, 8405 Winterthur (CH)
(74) Vertreter: Sulzer Management AG

(57) **Zusammenfassung**

Die Erfindung betrifft einen Kreuzkopf-Grossdieselmotor (1) mit einer Grundplatte (2) zur Aufnahme einer Kurbelwelle (3), sowie einem zwei Aussenwände (4) umfassenden Ständer (5), welcher auf der Grundplatte (2) angeordnet ist. Auf dem Ständer (5) ist eine Zylindersektion (6) zur Aufnahme von Zylindern angeordnet, wobei die Grundplatte (2), der Ständer (5) und die Zylindersektion (6) durch einen Zuganker (7) miteinander verbunden sind, der sich im Bereich des Ständers (5) entlang einer transversalen Stützwand (8) erstreckt. Auf der Stützwand (8) ist eine Gleitfläche (9) einer transversalen Höhe (H) zur Abstützung eines Kreuzkopfes (10) ausgebildet, welcher zwischen einem oberen Totpunkt (OTP) und einem unteren Totpunkt (UTP) über eine Hubstrecke (HS) hin- und herbewegbar angeordnet ist. Erfindungsgemäss ist an der Stützwand (8) abschnittsweise ein Stützelement (11) derart vorgesehen, dass eine transversale Ausdehnung (h) des Stützelements (11) kleiner ist als die transversale Höhe (HT) der Gleitfläche (9).

## Beschreibung

Die Erfindung betrifft einen Kreuzkopf-Grossdieselmotor gemäss dem Oberbegriff des unabhängigen Anspruchs 1.

Ein Grossdieselmotor der Kreuzkopfbauart, wie er bevorzugt im Schiffsbau oder in stationären Anlagen, beispielsweise zur Erzeugung elektrischer Energie zum Einsatz kommt, umfasst drei grosse Gehäusesegmente, die den Rahmen des Motors bilden. Auf einer Grundplatte, die neben einem Lagersattel mit Kurbelwellenhauptlager zur Aufnahme der Kurbelwelle transversale Stützelemente aufweist, ist, getrennt durch eine Bodenplatte, ein sogenannter Ständer angeordnet. Die aus dem Stand der Technik bekannten Ständer umfassend entsprechend der Anzahl der Zylinder des Grossdieselmotors mehrere gegenüber angeordnete Stützkörper, die jeweils eine senkrecht verlaufende Gleitfläche zur Führung zweier benachbarter Kreuzköpfe, die über Schubstangen mit der Kurbelwelle verbunden sind, aufweisen. Dabei werden jeweils zwei gegenüberliegende senkrecht verlaufende Gleitflächen durch eine Mittelwand zusätzlich abgestützt. Die einzelnen Stützkörper sind in der Regel durch ein gemeinsames Deckblech miteinander verbunden. Oberhalb des Ständers ist dann am Deckblech eine Zylindersektion, häufig auch Zylindermantel genannt angeordnet, die zur Aufnahme mehrerer Zylinderliner geeignet ist. Die Grundplatte, der Ständer und die Zylindersektion werden dabei durch Zuganker, die sich im Bereich des Ständers in aller Regel innerhalb der Stützkörper erstrecken, miteinander verbunden, indem die Zuganker in oder an der Grundplatte unter erheblicher Vorspannung verschraubt werden.

Aus der DE 3 512 347 C1 ist ein Ständer mit einer Abstützung für Kreuzkopfgleitbahnen von Kolbenmaschinen bekannt, bei dem die Abstützung doppelwandig ausgestaltet ist. Der Ständer, auf welchem ein Zylindermantel zur Aufnahme von Zylinderlinern platziert ist, ist auf Bodenblechen auf einer Grundplatte angeordnet, wobei die Bodenbleche zusammen mit schräg verlaufenden Aussenwänden und senkrechten Gleitflächen zwei im Querschnitt trapezförmige Rahmen bilden, die durch ein gemeinsames Deckblech miteinander verbunden sind. Zwischen den Aussenwänden und den Gleitflächen sind die trapezförmigen Rahmen durch transversale Stützwände ausgefüllt, so dass sich als Abstützung ein doppelwandig ausgestalteter Stützkörper ergibt. Die Grundplatte umfasst einen Lagersattel mit einer unteren und einer oberen Lagerschale mit Lagerdeckel, in welcher Lagerschale die Kurbelwelle im Lagersattel der Grundplatte gelagert ist. Zylindermantel, Ständer und Grundplatte des Motors werden von Zugankern zusammengehalten, die unter Vorspannung unterhalb der Kurbelwelle am oder im Lagersattel fixiert sind.

In der EP 0 774 061 ist ein doppelwandiger Stützkörper mit dreieckigem Querschnitt offenbart, in welchem jeweils zwei Zuganker geführt sind.

Bei solchen bekannten Kreuzkopf-Grossdieselmotoren sind die doppelwandig ausgestalteten Stützkörper des Ständers auf ebenfalls doppelwandig ausgestalteten Stützelementen in der Grundplatte abgestützt. Das heisst, sowohl der Ständer als auch die Grundplatte sind durch transversale Stützwände doppelwandig ausgestaltet.

Dabei sind jedoch im Stand der Technik auch Grossdieselmotoren bekannt, bei welchen die Grundplatte durch transversale Stützwände gebildet wird, die einwandig ausgestaltet ist. Eine solche verbesserte Lösung hat die Anmelderin bereits vor einigen Jahren in der EP 1 382 829 B1 vorgeschlagen.

Der aus diesem Stand der Technik bekannte Aufbau eines Kreuzkopf-Grossdieselmotors hat dabei einige gravierende Nachteile. Die Stützkörper werden im Ständer durch Schweissnähte fixiert. Wenn die Stützkörper durch zwei gegenüber angeordnete Wände zweiwandig ausgestaltet sind, können die Schweissnähte zwischen zwei Wänden, die im Ständer einen doppelwandigen Stützkörper bilden, nicht gegen geschweisst werden, so dass sich entsprechende Probleme mit der Festigkeit bzw. der Stabilität ergeben. Die Ausrichtung der Grundplatte in Bezug auf den Ständer ist schwierig, weil die Wände des Stützelementes der Grundplatte fluchtend in Bezug auf die Stützwände des Stützkörpers im Ständer angeordnet werden müssen.

Die Stützkörper erstrecken sich dabei im wesentlichen über die gesamte Höhe des Ständers, was bei den geschlossenen zweiwandig ausgestalteten Stützkörpern nicht nur zu den erwähnten Problemen beim Schweissen führt, da das Innere der Stützkörper nicht zugänglich ist und diese daher nicht gegen geschweisst werden können. Darüber hinaus verbrauchen die doppelwandigen Stützkörper, die sich im Wesentlichen über die gesamte Höhe des Ständers zwischen Bodenplatte oberhalb der Grundplatte und dem Deckblech unterhalb der Zylindersektion erstrecken, eine grosse Menge an Material.

Das heisst, die bekannten Stützkörper sind nicht nur kompliziert im Ständer zu montieren und können in Bezug auf die Schweissnähte zu Sicherheitsproblemen führen. Die bekannten Lösungen sind wegen des hohen Materialverbrauchs auch teuer und tragen bedeutend zum Gesamtgewicht des Ständers bei.

Ausgehend vom Stand der Technik ist es daher eine Aufgabe der Erfindung, einen verbesserten Kreuzkopf-Grossdieselmotor vorzuschlagen, bei welchem die durch die Ausgestaltung des Ständers bekannten Nachteile vermieden werden. Insbesondere soll ein Ständer vorgeschlagen werden, der mit weniger Materialaufwand herstellbar ist und damit deutlich weniger Gewicht hat als die bekannten Ständer. Darüber hinaus soll der durch die Erfindung vorgeschlagene Ständer einfacher zu montieren sein, wobei gleichzeitig die bekannten Probleme mit den Schweissnähten vermieden werden, die sich zwangsläufig bei den bekannten Ständern ergeben, die sich als geschlossener Körper über die gesamte Höhe des Ständers zwischen Bodenplatte und Deckblech erstrecken.

Die diese Aufgaben lösenden Gegenstände der Erfindung sind durch die Merkmale des unabhängigen Anspruchs 1 gekennzeichnet.

Die abhängigen Ansprüche beziehen sich auf besonders vorteilhafte Ausführungsformen der Erfindung.

Erfindungsgemäss wird somit ein Kreuzkopf-Grossdieselmotor mit einer Grundplatte zur Aufnahme einer Kurbelwelle, sowie einem zwei Aussenwände umfassenden Ständer, welcher auf der Grundplatte angeordnet ist, vorgeschlagen. Auf dem Ständer ist eine Zylindersektion zur Aufnahme von Zylindern angeordnet, wobei die Grundplatte, der Ständer und die Zylindersektion durch einen Zuganker miteinander verbunden sind, der sich im Bereich des Ständers entlang einer transversalen Stützwand erstreckt. Auf der Stützwand ist eine Gleitfläche einer transversalen Höhe zur Abstützung eines Kreuzkopfes ausgebildet, welcher zwischen einem oberen Totpunkt und einem unteren Totpunkt über eine Hubstrecke hin- und herbewegbar angeordnet ist. Erfindungsgemäss ist an der Stützwand abschnittsweise ein Stützelement derart vorgesehen, dass eine transversale Ausdehnung des Stützelements kleiner ist als die transversale Höhe der Gleitfläche.

Dadurch, dass an der Stützwand nur abschnittsweise ein Stützelement vorgesehen ist, wird durch die vorliegende Erfindung erstmals ein Ständer für einen Kreuzkopf-Grossdieselmotor vorgeschlagen, der mit weniger Materialaufwand herstellbar ist und damit deutlich weniger Gewicht hat als die bekannten Ständer und in der Herstellung kostengünstiger ist.

Dadurch, dass das Stützelement nur abschnittsweise an der Stützwand vorgesehen wird, und nicht wie aus dem Stand der Technik bekannt ein zwischen Bodenblech und Deckblech durchgehenden Stützkörper verwendet wird, ist der erfindungsgemässe Ständer einfacher zu montieren, wobei gleichzeitig die bekannten Probleme mit den Schweissnähten vermieden werden, die sich zwangsläufig bei den bekannten Ständern, die sich als vollständig geschlossener Körper über die gesamte Höhe des Ständers zwischen Bodenplatte und Deckblech erstrecken, ergeben.

Das Stützelement gemäss der Erfindung ist nämlich höchstens abschnittsweise an der Stützwand vorgesehen. Dadurch kann auch bei einem doppelwandigen Stützelement das Innere des Stützelement mit einer geeigneten Schweissvorrichtung grundsätzlich erreicht werden, so dass das Stützelement gegen geschweisst und somit zuverlässig dauerhaft mit der Stützwand verbunden werden kann.

Ausserdem ist es möglich die Schweissnähte nach dem Schweissen mit geeigneten Diagnosegeräten, zum Beispiel mit Ultraschallgeräten, zuverlässig auf eventuelle Schäden zusätzlich auch an den inneren Schweissnähten zu untersuchen, so dass in Bezug auf die Schweissnähte des Stützelements ein bisher nicht gekanntes Höchstmass an Qualität und Sicherheit garantiert werden kann.

Die Erfindung beruht dabei auf der Erkenntnis, dass die Kraft, die der Kreuzkopf bei seiner Bewegung entlang der transversalen Richtung auf die Gleitbahnen ausübt, erstens in Bezug auf die horizontale Richtung mehr oder weniger stark asymmetrisch ist und zweites entlang der transversalen Richtung stark variiert und sowohl in der Nähe des oberen Totpunktes des Kreuzkopfes, als auch oberhalb des unteren Totpunktes ein Maximum aufweist.

Zur Klarstellung sei an dieser Stelle kurz erwähnt, dass, wenn im Rahmen dieser Anmeldung Bezug auf bestimmte Raumrichtungen im Grossdieselmotor genommen wird, mit der longitudinalen Richtung grundsätzlich die Richtung gemeint ist, in der die Kurbelwelle des Grossdieselmotors liegt. Die transversale Richtung ist die dazu senkrechte Richtung, die parallel zur Längsachse der Zylinderlinerliner liegt. Die transversale Richtung ist somit die senkrechte Richtung in die sich die Höhe des Grossdieselmotors im Einbauzustand in der Regel erstreckt. Die horizontale Richtung steht dabei gleichzeitig auf der longitudinalen Richtung und der transversalen Richtung senkrecht, ist also im Einbauzustand gewöhnlich die waagerechte Richtung des Motors.

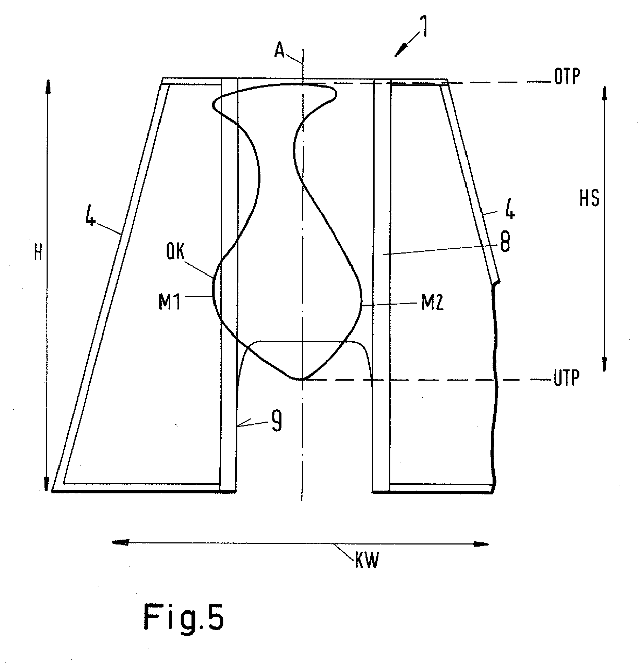

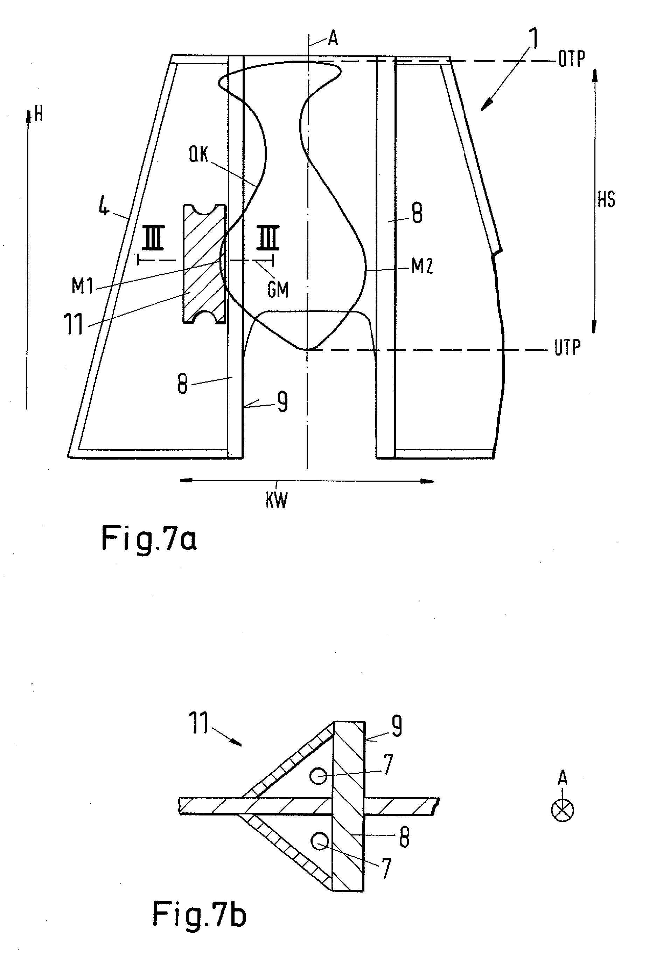

Dabei ist der oben beschriebene Verlauf der Kraft, die der Kreuzkopf auf die Gleitflächen der Stützwände ausübt, im Prinzip bekannt. Er hat, wie später anhand der Fig. 5 bzw. Fig. 7a noch näher erläutert wird, eine charakteristische Kontur, die etwas an die Kontur eines Fisches erinnert, wobei die Kontur des Kraftverlaufs in Bezug auf die horizontale Richtung nicht symmetrisch ist. Das liegt daran, dass beim Kompressionshub des Kolbens des Grossdieselmotors im Verbrennungsraum nur der Kompressionsdruck anliegt, während im Expansionshub des Kolbens im Verbrennungsraum zusätzlich noch der durch die Verbrennung des Treibstoffs erzeugte zusätzliche Verbrennungsdruck anliegt, so dass im Expansionshub auch die auf die Gleitbahnen resultierende horizontale Kraftkomponente grösser ist als beim Kompressionshub.

Somit ist die asymmetrische Verschiebung der Kontur des Kraftverlaufs auch charakteristisch für die Drehrichtung in der Motor betrieben wird. Dreht der Motor zum Beispiel von Achtern aus gesehen, also bei Blickrichtung auf die Antriebsseite des Motors, die bei einem Schiff natürlich die Schraubenseite ist, nach links, so spricht man von einem linksdrehenden Motor. Im Fall eines linksdrehenden Motors wird die grössere Kraft in die ebenfalls von Achtern gesehen rechte horizontale Richtung ausgeübt. Bei einem rechts drehenden Motor wir die grössere Kraft entsprechend in die linke horizontale Richtung ausgeübt.

Oder anders ausgedrückt, da von Achtern betrachtet die Abgasseite des Grossdieselmotors in der Regel rechts liegt und die Aggregate für die Treibstoffzufuhr usw., also die Pumpenseite links liegt, liegt bei einem rechts drehenden Motor die grössere Kraft pumpenseitig an und bei links drehenden Motor liegt die grössere Kraft abgasseitig an.

Entgegen aller bisher vorherrschenden Meinung ist nun durch die vorliegende Erfindung gezeigt worden, dass die Stützwände nicht über die gesamte Höhe des Ständers mit einem Stützkörper abgestützt werden müssen, sondern dass es im wesentlichen ausreicht, wenn die Stützwände im Bereich des Maximums der horizontalen Krafteinwirkung des Kreuzkopfes auf die Gleitflächen mit einem erfindungsgemässen Stützelement verstärkt werden.

Dabei kann es in bestimmten Fällen aus Stabilitätsgründen sinnvoll sein, die Dicke der Stützwand über die gesamte Höhe zu verstärken. Die Geometrie der notwendigen Verstärkung hängt dabei im Einzelfall von verschiedenen Faktoren, insbesondere z.B. von der Baugrösse des Motors, der Leistung des Motors und anderen Faktoren ab. Dabei ist, wie gesagt, eine Verstärkung der Stützwände nicht in allen Fällen erforderlich.

Versuche mit einem Grossdieselmotor mit 350mm Zylinderbohrung haben zum Beispiel gezeigt, dass es genügt die bekannte Stützwand, die über die gesamte Höhe des Ständers mit einem Stützkörper abgestützt ist, lediglich von ursprünglich 40mm Dicke auf 60mm Dicke zu verstärken, um ein Stützelement der vorliegenden Erfindung vorteilhaft einsetzen zu können.

Bei Motoren, die zum Beispiel eine geringere Leistung haben oder ohnehin schon über eine genügend Dicke Stützwand verfügen, hat sich gezeigt, dass ein erfindungsgemässes Stützelement auch ohne Verstärkung der Stützwand verwendbar ist.

In bestimmten Fällen kann es sinnvoll sein, wenn die Belastung durch die horizontale Kraftkomponente im oberen Totpunkt des Kreuzkopfes ein vorgegebenes Mass überschreitet, z.B. auch die Dicke des Deckblechs, das den Ständer von der Zylindersektion trennt, entsprechend zu verstärken. Wobei es selbstverständlich auch möglich ist, ein verstärktes Bodenblech einzusetzen um die Verankerung im Bereich der Grundplatte zusätzlich zu verstärken.

Bevorzugt ist eine transversale geometrische Mitte des Stützelements maximal 75% der Hubstrecke des Kreuzkopfes vom unteren Totpunkt entfernt, so dass gewährleistet ist, dass das Maximum der horizontalen Krafteinwirkung des Kreuzkopfes durch das Stützelement wirksam kompensiert wird. Dabei ist die transversale geometrische Mitte des Stützelements besonders bevorzugt maximal 50%, im Speziellen maximal 30% der Hubstrecke vom unteren Totpunkt entfernt ist.

Was die Grösse des Stützelements betrifft, beträgt dessen transversale Ausdehnung maximal 75% der transversalen Höhe der Gleitfläche.

Bevorzugt beträgt die transversale Ausdehnung des Stützelements dabei 40% bis 75% der transversalen Höhe der Gleitfläche. In speziellen Fällen kann die transversale Ausdehnung des Stützelements zwischen 5% und 40%, insbesondere weniger als 30% der transversalen Höhe der Gleitfläche betragen.

Wie bereits oben ausführlich erläutert, übt der Kreuzkopf im Betriebszustand eine in Bezug auf eine Zylinderachse eines Zylinderliners asymmetrisch verlaufende horizontale Querkraft auf die transversale Stützwand aus, so dass das Stützelement besonders vorteilhaft im Bereich eines Maximums der Querkraft an der Stützwand vorgesehen wird.

Dabei kann ein Querschnitt des Stützelement selbst im Prinzip jede bekannte Querschnittsform eines an sich bekannten durchgehenden Stützkörpers haben, aber auch jede andere Form haben, die dazu geeignet ist, die auf die Stützwand wirkenden horizontalen Kräfte geeignet aufzunehmen.

Bevorzugt ist das Stützelement, wie bei den aus dem Stand der Technik bekannten durchgehenden Stützkörpern, doppelwandig mit einem dreieckförmigem Querschnitt ausgeführt. In einem anderen Ausführungsbeispiel ist das Stützelement z.B. doppelwandig mit einem rechteckigen Querschnitt ausgeführt ist. Natürlich kann das Stützelement auch einwandig als kompaktes Stützelement ausgestaltet sein.

Je nach Anforderung an die Stabilität des Grossdieselmotors als ganzes bzw. je nach dem welche konkrete Ausführungsform des Stützelements gewählt wird, ist ein Zuganker durch das Stützelement geführt ist. In anderen Fällen können auch mehrere Zuganker, bevorzugt genau zwei Zuganker durch das Stützelement geführt sein.

Dabei kann z.B. nur an einer Seite des Grossdieselmotors an den Stützwänden ein Stützelement der vorliegenden Erfindung vorgesehen sein oder es kann beispielsweise an zwei horizontal gegenüberliegenden Stützwänden, die denselben Kreuzkopf führen, jeweils ein Stützelement vorgesehen sein. In speziellen Fällen, in denen die Asymmetrie der horizontal wirkenden Kräfte nicht all zu stark ist, ist es auch möglich, dass zum Beispiel entlang der Kurbelwelle jeweils links und rechts alternierend ein Stützelement vorgesehen wird, wodurch eine höhere Symmetrie der Kraftableitung über die gesamte Länge des Motors erreichbar ist.

Selbstverständlich ist es auch möglich, dass an ein und derselben Stützwand mindestens zwei oder mehr, eventuell voneinander beabstandete Stützelemente vorgesehen sind, wodurch unter anderem die Steifigkeit der Stützwände erhöht werden kann.

Es versteht sich von selbst, dass in einem Kreuzkopf-Grossdieselmotor der vorliegenden Erfindung auch ein Stützelement mit einem an sich bekannten Stützkörper, der sich von einem Bodenblech der Grundplatte bis zu einem Deckblech des Ständers durchgehend als transversaler Stützkörper erstreckt, vorteilhaft kombinierbar ist. So ist es zum Beispiel möglich, dass auf einer Seite der Kurbelwelle, auf der aufgrund der Asymmetrie der horizontalen Kraftverteilung die grösseren Kräfte auf die Gleitbahnen wirken, ein an sich bekannter durchgehender Stützkörper vorgesehen wird, während auf der anderen Seite der Kurbelwelle, wo die horizontalen Kräfte im Vergleich kleiner sind, weil der Motor im Betriebszustand in die entsprechende Richtung dreht, ein erfindungsgemässes Stützelement vorgesehen wird, da dieses bereits genügt um die einwirkenden horizontalen Querkräfte wirksam zu kompensieren.

Die Erfindung wird im Folgenden an Hand der Zeichnung näher erläutert. Es zeigen in schematischer Darstellung:
- Fig. 1: Ansicht eines Kreuzkopf-Grossdieselmotor mit Grundplatte, Ständer und Zylindersektion;
- Fig. 2: einen Schnitt I - I gemäss Fig. 1 eines bekannten Kreuzkopf-Grossdieselmotors mit doppelwandigem Stützelement;
- Fig. 3: einen Schnitt II - II gemäss Fig. 1 eines bekannten Kreuzkopf-Grossdieselmotors mit doppelwandigem Stützelement;
- Fig. 4: einen Schnitt II - II gemäss Fig. 1 eines anderen bekannten Kreuzkopf-Grossdieselmotors mit dreickförmigem doppelwandigem Stützelement;
- Fig. 5: Verlauf der horizontalen Krafteinwirkung auf die Gleitbahnen als Funktion der transversalen Höhe;
- Fig. 6: ein erstes Ausführungsbeispiel eines erfindungsgemässen Kreuzkopf-Grossdieselmotors mit einem einseitig angeordneten Stützelement ;
- Fig. 7a: Verlauf der horizontalen Krafteinwirkung auf die Gleitbahnen bei einem Ausführungsbeispiel gemäss Fig. 6;
- Fig. 7b: einen Schnitt entlang der Schnittlinie III - III gemäss Fig. 7a durch ein erstes Ausführungsbeispiel eines Stützelements;
- Fig. 7c: einen Schnitt entlang der Schnittlinie III - III gemäss Fig. 7a durch ein zweites Ausführungsbeispiel eines Stützelements;
- Fig. 7d: einen Schnitt entlang der Schnittlinie III - III gemäss Fig. 7a durch ein drittes Ausführungsbeispiel eines Stützelements;
- Fig. 8: ein zweites Ausführungsbeispiel eines erfindungsgemässen Kreuzkopf-Grossdieselmotors mit doppelseitig angeordnetem Stützelement;
- Fig. 9: ein drittes Ausführungsbeispiel eines erfindungsgemässen Kreuzkopf-Grossdieselmotors mit einem durchgehenden Stützkörper;

Der erfindungsgemässe Kreuzkopf-Grossdieselmotor, der im folgenden gesamthaft mit dem Bezugszeichen 1 bezeichnet wird, ist insbesondere als Zweitakt-Grossdieselmotor 1 mit Längsspülung ausgelegt, wie er beispielsweise im Schiffsbau verbreitet Verwendung findet.

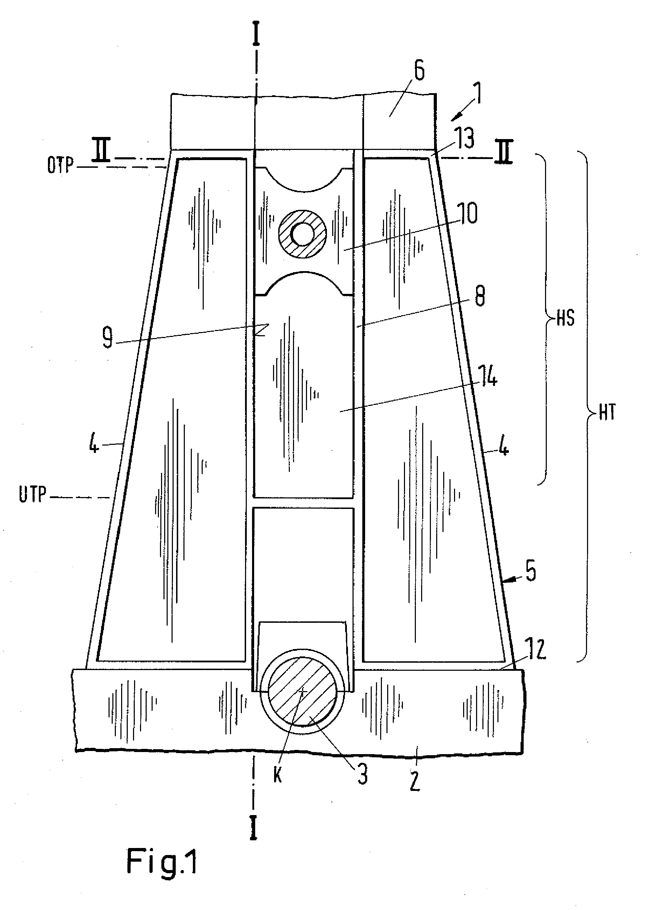

Fig. 1 zeigt schematisch im Schnitt einen Aufbau eines erfindungsgemässen Kreuzkopf-Grossdieselmotors 1 mit Grundplatte 2, Ständer 5 und Zylindersektion 6. Der in Fig. 1 dargestellte äussere Aufbau ist dabei im Wesentlichen identisch zum äusseren Erscheinungsbild eines bekannten Grossdieselmotors 1'.

Die Zylindersektion 6 dient in an sich bekannter Weise zur Aufnahme von nicht dargestellten Zylindern. Der Ständer 5, der beispielsweise durch Zusammenschweissen von Stahlblechen entstanden ist, weist ein Bodenblech 12 sowie zwei Aussenwände 4 auf und bildet gemeinsam mit den darstellungsgemäss senkrecht, also transversal verlaufenden Gleitflächen 9 zwei im Querschnitt trapezförmige Rahmen, die durch ein gemeinsames Deckblech 13 miteinander verbunden sind. Die zwei gegenüberliegenden senkrecht verlaufenden Gleitflächen 9 werden durch eine Mittelwand 14, die zwischen den beiden trapezförmigen Rahmen angeordnet ist, abgestützt. Der Ständer 5 ist mit dem Bodenblech 12 auf der Grundplatte 2 angeordnet, die einen Lagersattel mit Lagerschale zur Lagerung einer Kurbelwelle 3 umfasst. Die Kurbelwelle 3 mit Achse K ist in an sich bekannter Weise mit einem Kreuzkopf 10 über eine in Fig. 1 nicht gezeigte Schubstange 15 verbunden.

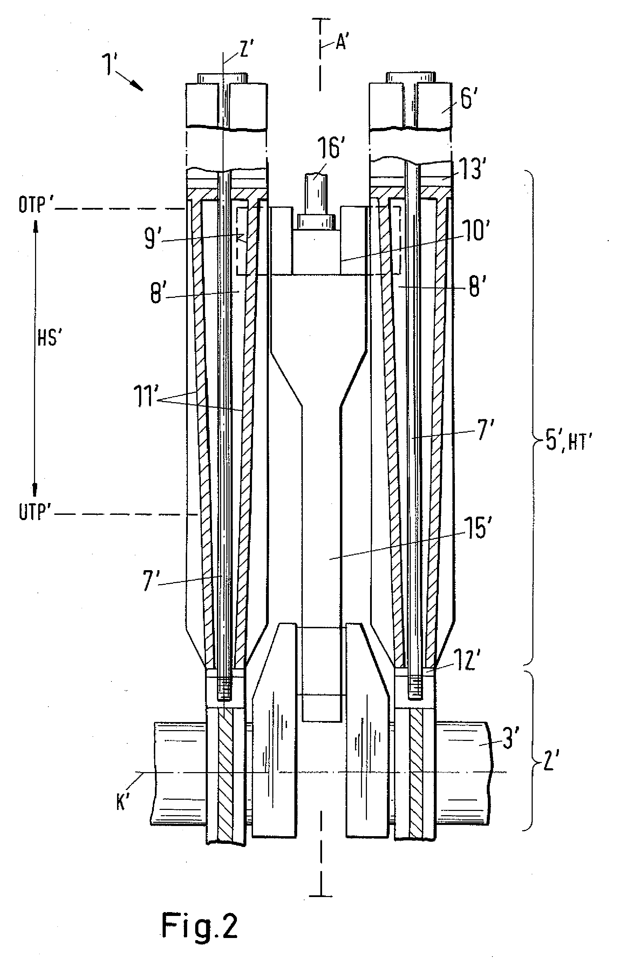

Zum besseren Verständnis der Erfindung sind in den Fig. 2 bis Fig. 4 verschiedene Ausführungsformen von aus dem Stand der Technik bekannten Ständern schematisch dargestellt. Dabei wurden zur besseren Unterscheidung des Stands der Technik von der vorliegenden Erfindung, die Bezugszeichen zu den Merkmalen aus den Fig. 2 bis Fig. 4 mit einem Hochkomma versehen, während die Merkmale in den übrigen Figuren, die erfindungsgemässe Ausführungsbeispiele darstellen, mit Bezugszeichen versehen, die kein Hochkomma tragen. Dabei sind die Merkmale erfindungsgemässer Ausführungsbeispiele und die korrespondierenden Merkmale von bekannten Ausführungen jeweils mit den gleichen Bezugszeichen bezeichnet, die sich nur wie erwähnt durch die Verwendung oder nicht Verwendung eines Hochkommas unterscheiden.

Fig. 2 zeigt einen Schnitt gemäss Fig. 1 entlang der Schnittlinie I - I durch eine bekannte Ausführungsform eines erfindungsgemässen Kreuzkopf-Grossdieselmotors 1', umfassend den Ständer 5', der auf der Grundplatte 2' angeordnet ist, sowie die Zylindersektion 6', die auf dem Ständer 5' platziert ist. Zwischen dem Ständer 5' und der Zylindersektion 6' ist ein Deckblech 13' und zwischen dem Ständer 5' und der Grundplatte 2' ein Bodenblech 12' angeordnet. Die Zylindersektion 6' ist in bekannter Weise zur Aufnahme eines oder mehrerer nicht gezeigter Zylinder geeignet. Der Innenraum des Zylinders bildet in bekannter Weise zusammen mit einem nicht gezeigten Zylinderdeckel und einem ebenfalls nicht gezeigten Kolben, der mittels einer Kolbenstange 16' mit dem Kreuzkopf 10' verbunden und im Zylinder hin- und herbewegbar angeordnet ist, einen Brennraum des Kreuzkopf-Grossdieselmotors 1'. Der Ständer 5' umfasst einen Stützkörper 11', an dem die transversale Stützwände 8' abgestützt sind. Die Stützwände 8' tragen eine Gleitfläche 9' zur Führung des Kreuzkopfes 10', der mittels der Schubstange 15' mit der Kurbelwelle 3' und mit der Kolbenstange 16' mit einem nicht dargestellten Kolben des Kreuzkopf-Grossdieselmotors 1' verbunden ist.

Kennzeichnend für den Stand der Technik ist dabei, dass sich der Stützkörper 11' zwischen dem Bodenblech 12' und dem Deckblech 13' im wesentlichen über die gesamte Höhe HT' des Ständers 5' erstreckt.

Die Grundplatte 2' umfasst zur Aufnahme und Lagerung der Kurbelwelle 3' einen Lagersattel sowie ein transversales Stützelement, das hier einwandig ausgestaltet ist; in einem anderen bekannten Beispiel aber auch zweiwandig ausgestaltete sein kann. Zylindersektion 6', Ständer 5' und Grundplatte 2' sind durch einen Zuganker 7' unter Vorspannung miteinander verbunden. Dabei erstreckt sich der Zuganker 7' im Bereich des Ständers 5' entlang den transversalen Stützwänden 8' innerhalb des doppelwandigen Stützkörpers 11' und ist im Lagersattel der Grundplatte 2' in einem Bereich zwischen der Achse K' der Kurbelwelle 3' und dem Ständer 5', also darstellungsgemäss oberhalb der Achse K' der Kurbelwelle 3', in einer Gewindebohrung fixiert.

Bei dem in Fig.2 dargestellten Ausführungsbeispiel erstrecken sich die Wände des Stützkörpers 11' V-förmig in Richtung der Zylindersektion 6', das heisst der gegenseitige Abstand der Wände des Stützkörpers 11' vergrössert sich zunehmend in Richtung zur Zylindersektion 6'.

In dem in Fig. 2 dargestellten besonders bevorzugten Ausführungsbeispiel erstreckt sich der Zuganker 7' mit seiner Längsachse Z' mittig zwischen den transversalen Wänden des Stützkörpers 11', wobei das einwandig ausgestaltete Stützelement der Grundplatte 2', auf dem sich der Stützkörper 11' in der Grundplatte 2' abstützt, fluchtend zur Längsachse Z' des Zugankers 7' angeordnet ist. Der Zuganker 7' ist, insbesondere um Deformationen der Lagerschalen zu vermeiden, in einem Bereich zwischen der Achse K' der Kurbelwelle 3' und dem Ständer 5', darstellungsgemäss also oberhalb der Achse K' der Kurbelwelle 3', im Lagersattel in einer Gewindebohrung fixiert. Dadurch, dass das einwandige Stützelement in der Grundplatte 2' fluchtend zur Längsachse Z' des Zugankers 7' und damit symmetrisch in Bezug auf die Wände des Stützkörpers 11' angeordnet ist, ergibt sich eine besonders hohe Stabilität, ohne dass die Grundplatte 2' eine zu hohe Steifigkeit aufweist.

Dabei sind durchaus im Stand der Technik auch Ausführungsformen bekannt, bei welchen die Zuganker 7' unterhalb der Achse K' der Kurbelwelle 3' verankert sind, die je nach Belastungsprofil ebenfalls einsetzbar sein können.

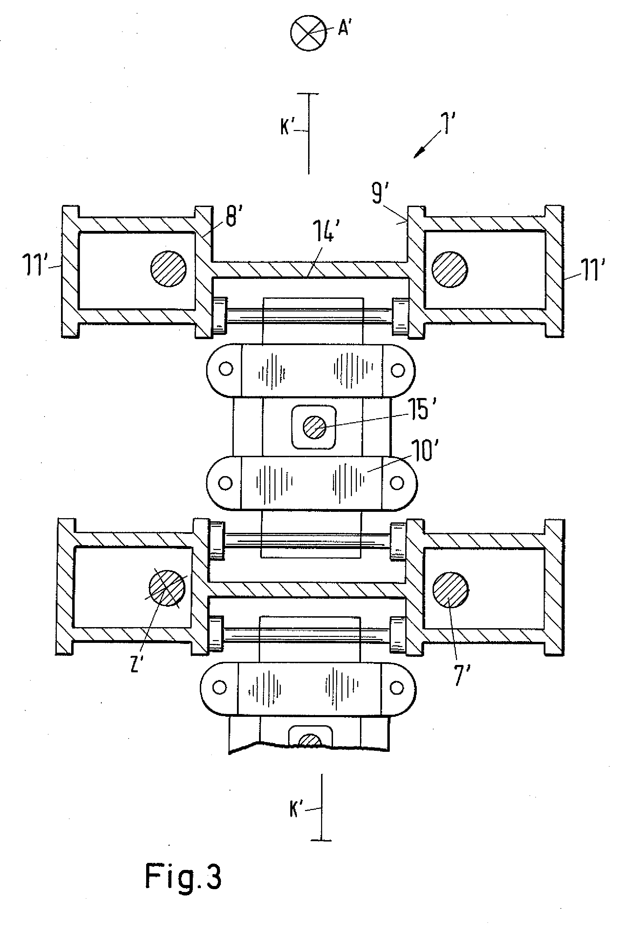

Fig. 3 zeigt einen weiteren Schnitt durch einen bekannten Ständer 5' gemäss Fig. 1 entlang der Linie II - II. Dargestellt sind je zwei im Ständer 5' gegenüber angeordnete Stützkörper 11', die durch die Mittelwand 14' zwischen den Gleitflächen 9' gegeneinander abgestützt sind. Der Kreuzkopf 10' wird zwischen je zwei gegenüberliegenden Gleitflächen 9' von jeweils zwei benachbarten Stützkörpern 11' geführt, die sich im wesentlichen über die gesamte Höhe H' des Ständers 5' zwischen der Bodenplatte 12' und dem Deckblech 13' erstrecken. In jedem Stützkörper 11' erstreckt sich zwischen den Wänden genau ein Zuganker 7'.

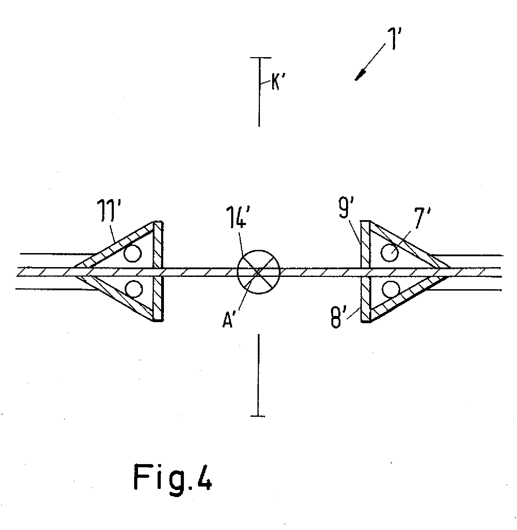

Die Fig. 4 zeigt schliesslich ein weiteres Beispiel eines bekannten Ständers 5' im Schnitt II - II gemäss Fig. 1, das sich vom Beispiel gemäss Fig. 3 im wesentlichen dadurch unterscheidet, dass der Stützkörper 11', der sich natürlich auch hier im wesentlichen über die gesamte Höhe HT' des Ständers 5' zwischen der Bodenplatte 12' und dem Deckblech 13' erstreckt, dreieckförmig ausgestaltet ist, wobei sich die Mittelwand 14' durch den Stützkörper 11' hindurch erstreckt und diesem dadurch zusätzliche Stabilität verleiht. Ausserdem wird dadurch der Stützkörper 11' in zwei Teilkörper aufgeteilt, in welchem sich jeweils ein Zuganker 7' erstreckt. Das heisst, im Gegensatz zum Beispiel der Fig. 3 sind bei dem dreieckförmigen Beispiel der Fig. 4 jedem Stützkörper 11' zwei Zuganker 7' zugeordnet.

In den Fig. 5 und Fig. 7a ist für einen erfindungsgemässen Kreuzkopf-Grossdieselmotor 1 der Verlauf der horizontalen Krafteinwirkung, also der horizontalen Querkraft QK auf die Gleitflächen 9 der Stützwände 8 als Funktion der transversalen Höhe H und in Abhängigkeit vom Kurbelwinkel KW schematisch dargestellt. Prinzipiell ist der entsprechende Kraftverlauf bei den aus dem Stand der Technik bekannten Grossdieselmotoren 1' im wesentlichen zu dem der Fig. 5 identisch.

Wie bereits Eingangs angedeutet, ist der Verlauf der horizontalen Querkraft QK, die der Kreuzkopf 10 bei seiner Bewegung entlang der transversalen Richtung über die Hubstrecke HS zwischen dem oberen Totpunkt OTP und dem unteren Totpunkt UTP auf die Gleitflächen 9 ausübt, erstens in Bezug auf die horizontale Richtung in Abhängigkeit vom Kurbelwinkel KW mehr oder weniger stark asymmetrisch und variiert anderseits beträchtlich entlang der transversalen Richtung, also entlang der Höhe H, wobei die Querkraft QK sowohl in der Nähe des oberen Totpunktes OTP des Kreuzkopfes 10, als auch oberhalb des unteren Totpunktes UTP ein Maximum aufweist. Die beiden unteren Maxima der Kurve QK, die sich in der Nähe des unteren Totpunktes UTP finden, sind mit M1 und M2 bezeichnet, was deutlich die Asymmetrie der Kurve QK demonstriert. In Bezug auf die Mittelachse A ist das Maximum M1 der Querkraft QK nämlich deutlich stärker ausgeprägt, entspricht also einer deutlich grösseren Querkraft QK, als das korrespondierende Maximum M2.

Das liegt daran, dass beim Kompressionshub des Kolbens des Grossdieselmotors 1 im Verbrennungsraum nur der Kompressionsdruck anliegt, während im Expansionshub des Kolbens im Verbrennungsraum zusätzlich noch der durch die Verbrennung des Treibstoffs erzeugte zusätzliche Verbrennungsdruck anliegt, so dass im Expansionshub auch die auf die Gleitbahnen 9 resultierende horizontale Kraftkomponente QK grösser ist als beim Kompressionshub. Das heisst, das Maximum M1 tritt beim Expansionshub des Kolbens auf, also bei der Bewegung des Kolbens von seinem oberen Totpunkt in Richtung zu unteren Totpunkt, während das Maximum M2 beim Kompressionshub des Kolbens auftritt.

Da die Querkraft QK nicht nur durch den im Zylinder herrschenden Druck, sondern auch durch die Winkelstellung der Schubstange 15 in Bezug auf die Längsachse A wesentlich bestimmt ist, entsteht die für einen kompletten Motorzyklus die in Fig. 5 und Fig. 7a schematisch dargestellte charakteristische Form, die an die Kontur eines Fischs erinnert.

Die horizontale Richtung der asymmetrische Verschiebung der Kontur QK des Kraftverlaufs, also ob das Maximum M1 bzw. M2 darstellungsgemäss rechts oder links vorliegt, ist dabei charakteristisch für die Drehrichtung in der Motor 1 betrieben wird. Dreht der Motor 1 zum Beispiel von Achtern aus gesehen, also bei Blickrichtung auf die Antriebsseite des Motors 1, die bei einem Schiff natürlich die Schraubenseite ist, nach links, so spricht man von einem linksdrehenden Motor 1. Im Fall eines linksdrehenden Motors 1 wird die grössere Kraft QK in die ebenfalls von Achtern gesehen rechte horizontale Richtung ausgeübt. Bei einem rechts drehenden Motor 1 wir die grössere Kraft QK entsprechend in die linke horizontale Richtung ausgeübt.

Oder anders ausgedrückt, da von Achtern bzw. der Antriebsseite betrachtet die Abgasseite des Grossdieselmotors 1 in der Regel rechts liegt und die Aggregate für die Treibstoffzufuhr usw., also die Pumpenseite links liegt, liegt bei einem rechts drehenden Motor 1 die grössere Kraft pumpenseitig an und bei links drehenden Motor 1 liegt die grössere Kraft abgasseitig an.

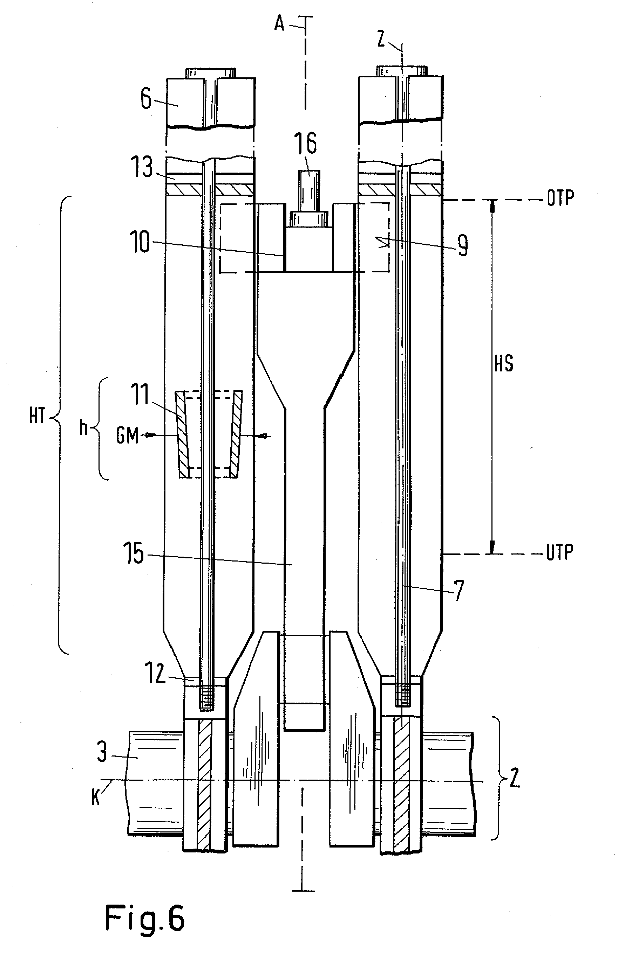

In Fig. 6 ist schematisch ein erstes Ausführungsbeispiel eines erfindungsgemässen Kreuzkopf-Grossdieselmotors 1 mit einem einseitig angeordneten Stützelement 11 gezeigt.

Fig. 6 zeigt dabei in Analogie zur Fig. 2 einen Schnitt entlang der Schnittlinie I - I durch den erfindungsgemässen Kreuzkopf-Grossdieselmotor 1 der Fig. 1. Der Kreuzkopf-Grossdieselmotor 1 gemäss Fig. 6 umfasst einen Ständer 5, der auf der Grundplatte 2 angeordnet ist, sowie eine Zylindersektion 6, die auf dem Ständer 5 platziert ist. Zwischen dem Ständer 5 und der Zylindersektion 6 ist ein Deckblech 13, und zwischen dem Ständer 5 und der Grundplatte 2 ist ein Bodenblech 12 angeordnet. Die Zylindersektion 6 ist in bekannter Weise zur Aufnahme eines oder mehrerer nicht gezeigter Zylinder geeignet. Der Innenraum des Zylinders bildet in bekannter Weise zusammen mit einem nicht gezeigten Zylinderdeckel und einem ebenfalls nicht gezeigten Kolben, der mittels einer Kolbenstange 16 mit dem Kreuzkopf 10 verbunden und im Zylinder hin- und herbewegbar angeordnet ist, einen Brennraum des Kreuzkopf-Grossdieselmotors 1. Erfindungsgemäss ist an der darstellungsgemäss linken Stützwand 8, an der die Gleitfläche 9 für den Kreuzkopf 10 vorgesehen ist, abschnittsweise ein Stützelement 11 derart angeordnet, dass eine transversale Ausdehnung h des Stützelements 11 kleiner ist als die transversale Höhe HT der Gleitfläche 9 bzw. des Ständers 5.

An der darstellungsgemäss rechten Stützwand 8 ist weder ein aus dem Stand der Technik bekannter Stützkörper 11' vorgesehen, noch ein erfindungsgemässes Stützelement 11, da beim Beispiel der Fig. 6 die grössten Querkräfte QK auf die darstellungsgemäss linke Stützwand 8 wirken.

Daher ist zur Erhöhung der Stabilität an der linken Stützwand 8 ein erfindungsgemässes Stützelement 11 vorgesehen, während an der rechten Stützwand 8 vollständig auf eine zusätzliche Abstützung 11, 11' verzichtet werden kann, da hier im Betriebszustand wesentlich kleinere Querkräfte QK wirken.

Das Stützelement 11 ist dabei so an der Stützwand 8 angeordnet, dass die geometrische Mitte GM des Stützelements 11, die ca. bei der halben transversalen Ausdehnung h des Stützelements 11 liegt, ungefähr im bereich des Maximums M1 der auf die Stützwand 8 wirkenden Querkraft QK liegt. Dies ist anhand der Fig. 7a nochmals verdeutlicht.

Wie bereits erwähnt, tragen die Stützwände 8 tragen eine Gleitfläche 9 zur Führung des Kreuzkopfes 10, der mittels der Schubstange 15 mit der Kurbelwelle 3 und mit der Kolbenstange 16 mit einem nicht dargestellten Kolben des Kreuzkopf-Grossdieselmotors 1 verbunden ist.

Kennzeichnend für die Erfindung ist dabei, dass sich das Stützelement 11 anders als der aus dem Stand der Technik bekannte Stützkörper 11', sich zwischen dem Bodenblech 12 und dem Deckblech 13 nicht über die gesamte Höhe HT des Ständers 5 erstreckt, sondern nur über eine transversale Ausdehnung h, die kleiner ist als die transversale Höhe HAT der Gleitfläche 9 bzw. des Ständers 5.

Die Grundplatte 2 umfasst dabei in an sich bekannter Weise zur Aufnahme und Lagerung der Kurbelwelle 3 einen Lagersattel sowie ein transversales Stützelement, das hier einwandig ausgestaltet ist. In einem anderen erfindungsgemässen Ausführungsbeispiel kann das transversale Stützelement in der Grundplatte 2 aber auch z.B. zweiwandig ausgestaltet sein kann. Wie an sich bekannt, sind Zylindersektion 6, Ständer 5 und Grundplatte 2 durch einen Zuganker 7 unter Vorspannung miteinander verbunden. Dabei erstreckt sich der Zuganker 7 im Bereich des Ständers 5 entlang der transversalen Stützwand 8 und bei der darstellungsgemäss linken Stützwand 8 innerhalb des doppelwandigen Stützelements 11. Der Zuganker 7 ist in an sich bekannte Weise im Lagersattel der Grundplatte 2 in einem Bereich zwischen der Achse K der Kurbelwelle 3 und dem Ständer 5, also darstellungsgemäss oberhalb der Achse K der Kurbelwelle 3, in einer Gewindebohrung fixiert.

In dem in Fig. 6 dargestellten besonders bevorzugten Ausführungsbeispiel erstreckt sich der Zuganker 7 mit seiner Längsachse Z mittig zwischen den transversalen Wänden des Stützelements 11, wobei das einwandig ausgestaltete Stützelement der Grundplatte 2, auf dem sich die Stützwand 8 in der Grundplatte 2 abstützt, fluchtend zur Längsachse Z des Zugankers 7 angeordnet ist. Der Zuganker 7 ist, insbesondere um Deformationen der Lagerschalen zu vermeiden, in einem Bereich zwischen der Achse K der Kurbelwelle 3 und dem Ständer 5, darstellungsgemäss also oberhalb der Achse K der Kurbelwelle 3, im Lagersattel in einer Gewindebohrung fixiert. Dadurch, dass das einwandige Stützelement in der Grundplatte 2 fluchtend zur Längsachse Z des Zugankers 7 angeordnet ist, ergibt sich eine besonders hohe Stabilität, ohne dass die Grundplatte 2 eine zu hohe Steifigkeit aufweist.

Dabei ist es bei einem anderen erfindungsgemässen Ausführungsbeispiel durchaus auch möglich, dass die Zuganker 7 unterhalb der Achse K der Kurbelwelle 3 verankert sind. Auch solche Ausführungsbeispiel der vorliegenden Erfindung können je nach Belastungsprofil ebenfalls vorteilhaft eingesetzt werden.

Fig. 7b zeigt einen Schnitt entlang der Schnittlinie III - III gemäss Fig. 7a durch ein erstes Ausführungsbeispiel eines Stützelements 11 gemäss der vorliegenden Erfindung.

Wie der Fig. 7b zu entnehmen ist, ist das Stützelement 11 in einem speziellen Ausführungsbeispiel ein dreieckförmiges Stützelement 11, in welchem zwei Zuganker geführt sind, und die Mittelwand 14 sich bis in das Stützelement 11 erstreckt, wodurch die Stabilität des Ständers 5 weiter erhöht wird.

Es versteht sich, dass durchaus auch andere dreieckförmige Stützelemente 11 vorteilhaft verwendet werden können. Zum Beispiel solche, bei welchen sich die Mittelwand 14 nicht bis in das Innere des Stützelements 11 erstreckt und / oder wobei jedem dreieckförmigen Stützelement 11 jeweils nur ein Zuganker 7 zugeordnet ist.

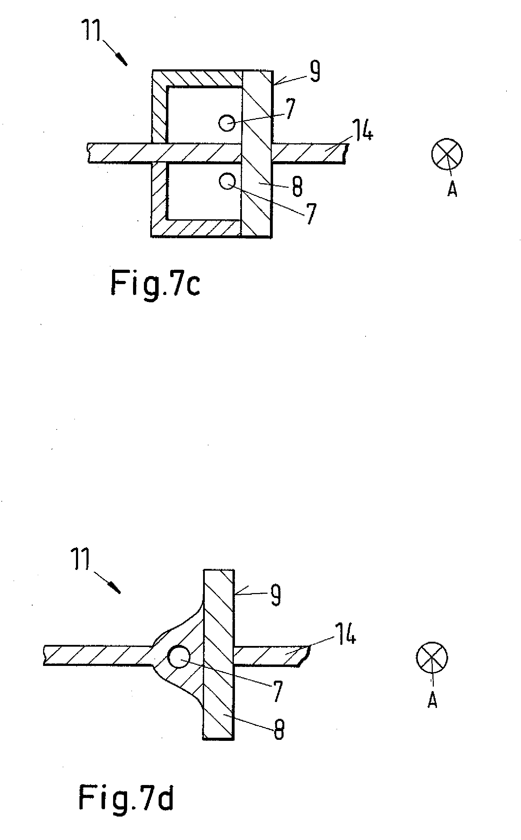

Die Fig. 7c und Fig. 7d zeigen jeweils einen Schnitt entlang der Schnittlinie III - III gemäss Fig. 7a durch ein zweites und ein drittes spezielles Ausführungsbeispiel eines Stützelements 11 gemäss der vorliegenden Erfindung.

Das Stützelement 11 ist dabei analog zu dem der Fig. 7b als hohler Körper aufgebaut, jedoch mit rechteckigem Querschnitt. Auch hier ist es zum Beispiel möglich, dass ein rechteckiger Querschnitt gewählt wird und z.B. nur ein Zuganker 7 durch das Stützelement 11 geführt wird.

Die Fig. 7d zeigt ein spezielles Ausführungsbeispiel eines erfindungsgemässen Stützelements 11, das nicht als hohler Körper, sondern als kompakter Körper ausgestaltet ist, durch den mindestens ein Zuganker hindurch geführt ist.

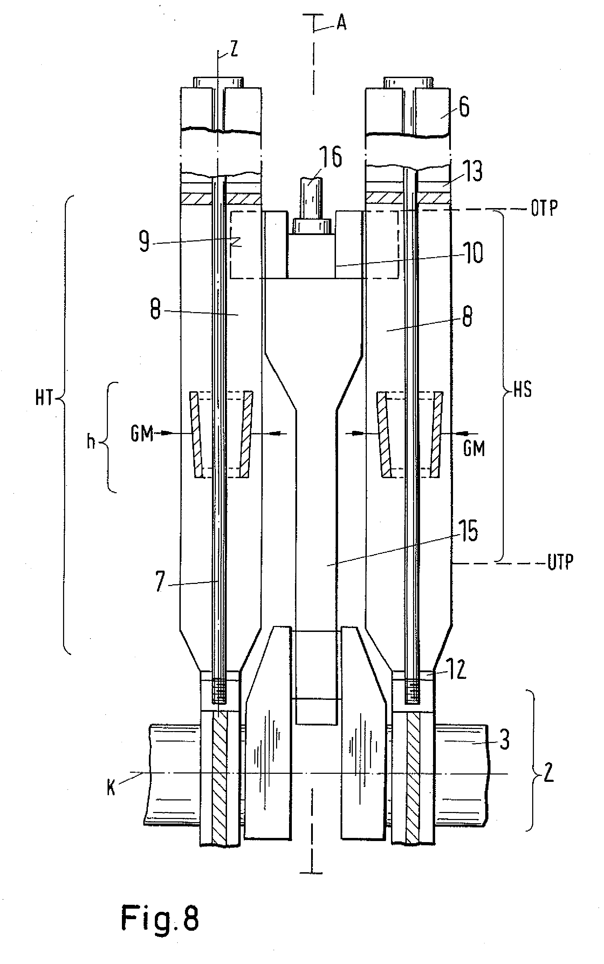

In Fig. 8 ist ein zweites Ausführungsbeispiel eines erfindungsgemässen Kreuzkopf-Grossdieselmotors 1 mit doppelseitig angeordnetem Stützelement 11 schematisch dargestellt. Dieses Ausführungsbeispiel ist besonders dann vorteilhaft einsetzbar, wenn auf beiden Seiten des Ständers 5 die an den Stützwänden 8 angreifenden Querkräfte QK so gross sind, dass zur Stabilisierung des Ständers auf beiden Seiten, bevorzugt im Bereich der Maxima M1, M2 der Querkräfte QK ein Stützelement 11 vorgesehen werden muss.

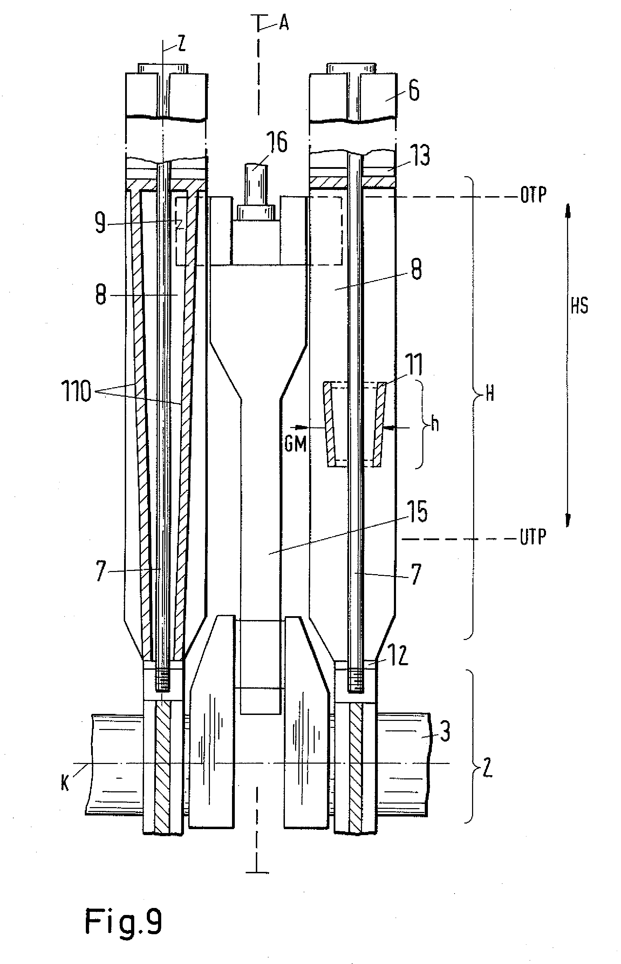

In Fig. 9 ist ein drittes für die Praxis sehr wichtiges Ausführungsbeispiel eines erfindungsgemässen Kreuzkopf-Grossdieselmotors 1 dargestellt, bei dem auf einer Seite des Ständers 5, hier darstellungsgemäss links ein durchgehenden transversaler Stützkörper 110 vorgesehen ist, wie er aus dem Stand der Technik an sich bekannt ist. Dabei ist gemäss der vorliegenden Erfindung an der gegenüber liegenden Stützwand 8 ein erfindungsgemässes Stützelement 11 vorgesehen.

Dieses sehr spezielle Ausführungsbeispiel kommt besonders dann sehr vorteilhaft zum Einsatz, wenn die Querkräfte QK auf einer Seite des Ständers, im Beispiel der Fig. 9 auf der darstellungsgemäss linken Seite so gross werden können, dass eine Abstützung durch ein erfindungsgemässes Stützelement 11 nicht ausreicht. Da aber auf der gegenüberliegenden Seite die Querkräfte QK deutlich kleiner sind, reicht es hier aus, nur abschnittsweise ein erfindungsgemässes Stützelement 11 der transversalen Ausdehnung h vorzusehen.

Der Fachmann versteht, dass die Erfindung nicht auf die explizit diskutierten Ausführungsbeispiele beschränkt ist, sondern entsprechende Weiterbildungen ebenfalls von der Erfindung abgedeckt sind. Insbesondere betrifft die Erfindung selbstverständlich alle geeigneten Kombinationen der diskutierten speziellen Ausführungsformen.

## Patentansprüche

1. Kreuzkopf-Grossdieselmotor mit einer Grundplatte (2) zur Aufnahme einer Kurbelwelle (3), einem zwei Aussenwände (4) umfassenden Ständer (5), welcher auf der Grundplatte (2) angeordnet ist, sowie eine auf dem Ständer (5) angeordnete Zylindersektion (6) zur Aufnahme von Zylindern, wobei die Grundplatte (2), der Ständer (5) und die Zylindersektion (6) durch einen Zuganker (7) miteinander verbunden sind, der sich im Bereich des Ständers (5) entlang einer transversalen Stützwand (8) erstreckt, wobei auf der Stützwand (8) eine Gleitfläche (9) einer transversalen Höhe (HT) zur Abstützung eines Kreuzkopfes (10) ausgebildet ist, welcher zwischen einem oberen Totpunkt (OTP) und einem unteren Totpunkt (UTP) über eine Hubstrecke (HS) hin- und herbewegbar angeordnet ist, **dadurch gekennzeichnet, dass** an der Stützwand (8) abschnittsweise ein Stützelement (11) derart vorgesehen ist, dass eine transversale Ausdehnung (h) des Stützelements (11) kleiner ist als die transversale Höhe (HT) der Gleitfläche (9).

2. Kreuzkopf-Grossdieselmotor nach Anspruch 1, wobei eine transversale geometrische Mitte (GM) des Stützelements (11) maximal 75% der Hubstrecke (HS) vom unteren Totpunkt (UTP) entfernt ist.

3. Kreuzkopf-Grossdieselmotor nach Anspruch 1 oder 2, wobei die transversale geometrische Mitte (GM) des Stützelements (11) maximal 50%, im Speziellen maximal 30% der Hubstrecke (HS) vom unteren Totpunkt (UTP) entfernt ist.

4. Kreuzkopf-Grossdieselmotor nach einem der vorangehenden Ansprüche, wobei die transversale Ausdehnung (h) des Stützelements (11) maximal 75% der transversalen Höhe (HT) der Gleitfläche (9) beträgt.

5. Kreuzkopf-Grossdieselmotor nach einem der vorangehenden Ansprüche, wobei die transversale Ausdehnung (h) des Stützelements (11) 40% bis 75% der transversalen Höhe (HT) der Gleitfläche (9) beträgt.

6. Kreuzkopf-Grossdieselmotor nach einem der vorangehenden Ansprüche, wobei die transversale Ausdehnung (h) des Stützelements (11) zwischen 5% und 40%, besonders bevorzugt weniger als 30% der transversalen Höhe (HT) der Gleitfläche (9) beträgt.

7. Kreuzkopf-Grossdieselmotor nach einem der vorangehenden Ansprüche, wobei im Betriebszustand der Kreuzkopf (10) eine in Bezug auf eine Zylinderachse (A) asymmetrisch verlaufende horizontale Querkraft (QK) auf die transversale Stützwand (8) ausübt, und das Stützelement (11) im Bereich eines Maximums (M1, M2) der Querkraft (QK) an der Stützwand (8) vorgesehen ist.

8. Kreuzkopf-Grossdieselmotor nach einem der vorangehenden Ansprüche, wobei das Stützelement (11) doppelwandig mit einem dreieckförmigem Querschnitt ausgeführt ist.

9. Kreuzkopf-Grossdieselmotor nach einem der vorangehenden Ansprüche, wobei das Stützelement (11) doppelwandig mit einem rechteckigen Querschnitt ausgeführt ist.

10. Kreuzkopf-Grossdieselmotor nach einem der vorangehenden Ansprüche, wobei das Stützelement (11) einwandig als kompaktes Stützelement (11) ausgestaltet ist.

11. Kreuzkopf-Grossdieselmotor nach einem der vorangehenden Ansprüche, wobei genau ein Zuganker (7) durch das Stützelement (11) geführt ist.

12. Kreuzkopf-Grossdieselmotor nach einem der vorangehenden Ansprüche, wobei mehrere Zuganker (7), bevorzugt genau zwei Zuganker (7) durch das Stützelement (11) geführt sind.

13. Kreuzkopf-Grossdieselmotor nach einem der vorangehenden Ansprüche, wobei an zwei horizontal gegenüberliegenden Stützwänden (8), die denselben Kreuzkopf (10) führen, jeweils ein Stützelement (11) vorgesehen ist.

14. Kreuzkopf-Grossdieselmotor nach einem der vorangehenden Ansprüche, wobei an ein und derselben Stützwand (8) mindestens zwei Stützelemente (11) vorgesehen sind.

15. Kreuzkopf-Grossdieselmotor nach einem der vorangehenden Ansprüche, wobei ein von einem Bodenblech (12) der Grundplatte (2) bis zu einem Deckblech (13) des Ständers (5) durchgehender transversaler Stützkörper (110) vorgesehen ist.

## Geänderte Patentansprüche

### Geänderte Patentansprüche gemäss Regel 137(2) EPÜ.

**5.** Kreuzkopf-Grossdieselmotor nach einem der vorangehenden Ansprüche, wobei die transversale Ausdehnung (h) des Stützelements (11) 40% bis 75% der transversalen Höhe (HT) der Gleitfläche (9) beträgt.

**6.** Kreuzkopf-Grossdieselmotor nach einem der vorangehenden Ansprüche, wobei die transversale Ausdehnung (h) des Stützelements (11) zwischen 5% und 40%, besonders bevorzugt weniger als 30% der transversalen Höhe (HT) der Gleitfläche (9) beträgt.

**7.** Kreuzkopf-Grossdieselmotor nach einem der vorangehenden Ansprüche, wobei im Betriebszustand der Kreuzkopf (10) eine in Bezug auf eine Zylinderachse (A) asymmetrisch verlaufende horizontale Querkraft (QK) auf die transversale Stützwand (8) ausübt, und das Stützelement (11) im Bereich eines Maximums (M1, M2) der Querkraft (QK) an der Stützwand (8) vorgesehen ist.

**8.** Kreuzkopf-Grossdieselmotor nach einem der vorangehenden Ansprüche, wobei das Stützelement (11) doppelwandig mit einem dreieckförmigem Querschnitt ausgeführt ist.

**9.** Kreuzkopf-Grossdieselmotor nach einem der Ansprüche 1 bis 7, wobei das Stützelement (11) doppelwandig mit einem rechteckigen Querschnitt ausgeführt ist.

**10.** Kreuzkopf-Grossdieselmotor nach einem der Ansprüche 1 bis 7, wobei das Stützelement (11) einwandig als kompaktes Stützelement (11) ausgestaltet ist.

**11.** Kreuzkopf-Grossdieselmotor nach einem der vorangehenden Ansprüche, wobei genau ein Zuganker (7) durch das Stützelement (11) geführt ist.

**12.** Kreuzkopf-Grossdieselmotor nach einem der Ansprüche 1 bis 10, wobei mehrere Zuganker (7), bevorzugt genau zwei Zuganker (7) durch das Stützelement (11) geführt sind.
